# EUROPEAN PATENT SPECIFICATION

(11) **EP 2 369 947 B1**
(45) Date of publication and mention of the grant of the patent: **06.03.2013**
(21) Application number: 09815451.1
(22) Date of filing: 21.12.2009
(51) Int. Cl.: A23L 1/30, A23L 1/304, A23L 1/305, A61K 31/198, A61K 31/357, A61K 31/695, C12C 5/02, A61K 36/28

(54) **BEER AND BEER-BASED BEVERAGES AND METHOD OF MODIFICATION OF POLYPHENOLS AND SILICON CONTENT IN THESE BEVERAGES**
BIER UND GETRÄNKE AUF BIERBASIS SOWIE VERFAHREN ZUR MODIFIKATION DER POLYPHENOLE UND DES SILICIUMGEHALTS IN DIESEN GETRÄNKEN
BIÈRE ET BOISSONS À BASE DE BIÈRE ET PROCÉDÉ DE MODIFICATION DE LA TENEUR EN POLYPHÉNOLS ET SILICIUM DE CES BOISSONS

(30) Priority: 23.12.2008 CZ 20080841
(43) Date of publication of application: 05.10.2011
(73) Proprietor: Agra Group, A.S., 387 15 Strelske Hostice (CZ)
(72) Inventor: STUCHLIK, Milan, 746 01 Opava 1 (CZ); KOPENEC, Jiri, 387 15 Strelske Hostice (CZ)
(74) Representative: Gabrielova, Marta
(86) International application number: PCT/CZ2009/000160
(87) International publication number: WO 2010/072183

(56) References cited:
- WO-A1-2007/082703
- CZ-B6- 300 846
- JP-A- 2008 019 198
- RU-A- 2008 119 253
- RU-C1- 2 270 588
- RU-C2- 2 198 210
- US-A- 3 994 925
- US-A1- 2004 162 270
- US-A1- 2006 099 276
- US-A1- 2006 115 556
- US-B1- 7 211 279
- SRIPANYAKORN S., JUGDAOHSINGH R., ELLIOTT H., WALKER C., MEHTA P., SHOUKRU S., THOMPSON R.P.H., POWELL J.J.: "The silicon content of beer and its bioavailability in healthy volunteers", BRITISH JOURNAL OF NUTRITION, vol. 91, 2004, pages 403-409, XP002624419, DOI: doi:10.1079/bjn20031082
- ERBE T ET AL: "Chromatographic determination of amino acid enantiomers in beers and raw materials used for their manufacture", JOURNAL OF CHROMATOGRAPHY, ELSEVIER SCIENCE PUBLISHERS B.V, NL, vol. 881, no. 1-2, 1 June 2000 (2000-06-01), pages 81-91, XP004200132, ISSN: 0021-9673, DOI: DOI:10.1016/S0021-9673(00)00255-7
- KABELOVA I ET AL: "Determination of free amino acids in beers: A comparison of Czech and foreign brands", JOURNAL OF FOOD COMPOSITION AND ANALYSIS, ACADEMIC PRESS, LONDON, GB, vol. 21, no. 8, 1 December 2008 (2008-12-01), pages 736-741, XP025399244, ISSN: 0889-1575, DOI: DOI:10.1016/J.JFCA.2008.06.007 [retrieved on 2008-07-01]

## Description

### Technical Field

The invention relates to beer and beer-based beverages containing polyphenols and silicon substances and a method for the modification of the polyphenols and silicon substances contents to physiologically suitable concentrations.

### Background Art

Beer is an easily digestible, slightly bitter beverage promoting digestion and increasing appetite. The term "beer" refers to frothy beverages produced by fermentation of hopped wort prepared from malt, water, hops, or hops products, containing in addition to ethyl alcohol and carbon dioxide yielded by the fermentation process also certain amounts of the unfermented extract. Beer-based beverages include mainly fermented malt beverages produced from malt by brewing technology and beverages prepared by mixing beer with a non-alcoholic beverage or with a beverage concentrate for the preparation of non-alcoholic beverages and with soda water.

Malt is a product prepared by maceration, germination, and usually also by drying of cereal kernel, in which malting results in enzymatic transformations of endosperm and in the formation of typical tasting, aromatic, and colouring substances. For the preparation of malt, predominantly spring barley varieties are used, namely cultivated distichous barley, variety nutant (*Hordeum vulgare L. convar. Distichon, var. nutans*) and to a lower extent also varieties of other cereals, e.g., wheat, but also maize and rice. Up to one third of the total extract mass of the original wort, the hopped malt can be substituted by an extract, particularly of sugar, cereal starch, barley, wheat or rice.

Beer contains up to 40 mg/l of bitter substances of hops that exhibit particularly a sedative or even narcotic and bacteriostatic effect. The bitter substances of hops support bile secretion and thus they positively affect the process of digestion and enhance appetite. The non-alcoholic components of beer have a decisive role in the distinct stimulation effects of beer on the excretion of gastric juice and release of gastrin.

Beer is isotonic or nearly isotonic and due to its contents of about 1200 mg/l of mineral substances and in average of 920 g of water per liter it can be considered an ionic beverage contributing to the quenching of thirst. The average concentrations of macro elements in beer, in comparison with the recommended daily doses, are as follows:
- Phosphorus 500 ± 200 mg/l; recommended daily dose 800 mg
- Potassium 450 ± 150 mg/l; recommended daily dose 900 - 3500 mg
- Magnesium 105 ± 15 mg/l; recommended daily dose 300 - 400 mg
- Sodium 65 ± 45 mg/l; recommended daily dose 2.0 - 5.9 g (corresponding to 5 -15 g of NaCl)
- Calcium 50 ± 34 mg/l; recommended daily dose 800 - 1200 mg.

Due to its advantageous and well balanced contents of vitamins and vitagens, beer can supply a substantial part of the recommended daily doses of vitamins, particularly the vitamins of the B group.

Beer contains also vegetable fibers formed by polysaccharides of the cereal malt cell walls, such as celluloses, hemicelluloses, and beta-glucans. Beers contain about 1.5 g of fibers/liter and yeasty beers contain about 2.5 g of fibers/liter. The content of fibers in beer depends on the percentage of malt present.

Beer contains 3 - 5 g/l of pure proteins or polypeptides and about 85 % of these proteins come from malt and about 15 % from brewing yeasts. The profile of amino acids comprises nearly all essential amino acids.

For people suffering from the celiac disease, who do not tolerate the cereal protein gluten, contained in barley or wheat malt, beer is not a fully safe beverage. The content of gluten in malt (in g.kg⁻¹) varies within the limits of from 18.8 - 45.0 (for barley) and 44 - 68 (for wheat). Generally, gluten is composed of prolamine and gluteline. Wheat prolamine is known as gliadine, barley prolamine as hordeine. Although the beer production process results in a decrease of gluten content, from the total of 100 % of gluten in malt, less than 0.11 % of gluten remains in the stabilized beer. In the individual beer sorts the content of gluten (in mg.l⁻¹) increases in the sequence: non-alcoholic beer (< 3.0), lagers (< 3 - 8.7), black beers (9.0 - 15.2), wheat beers (10.6 - 41.2).

The daily intake of 10 mg of gluten is supposed to be maximum tolerable intake for people suffering from celiac disease, but every person with celiac disease has its own tolerable gluten level and a safe daily gluten intake limit cannot be defined.

With the growing global consumption of beer there is an increasing interest in its effects on the human organism and on the optimization of its physiological properties.

By the method according to this invention it is possible to prepare beer belonging to the group of herbal beers. Herbal beers are a category of flavoured beers and it can be prepared both by bottom fermented and top fermented beers by the yeast of the genus *Saccharomyces.*

By the method according to this invention, the concentrations of naturally present herbal polyphenols, amino acids, and silicon in beer and beer-based beverages can be modified to physiologically optimum values.

In the biological environment, polyphenols act demonstrably as antioxidants and thus slow down the course of pathological processes such as cancer, atherosclerosis, or myocardial infarction. Beer and beer-based beverages are a natural and suitable source of these substances. However, the amounts of catechins or flavanols in the beverages with malt extracts are highly variable, beer contains in average about 0.5 mg of quercetine and 0.5 mg of myricetine per 1 liter.

For instance, the US patent 4,946,701 covers the preparation of a beverage containing polyphenols by an addition of a green tea extract. Another US patent 5,240,732 covers the preparation of a multicomponent beverage containing polyphenols by the addition of extracts from the *Ginkgo biloba* and *Diospyros kaki* leaves and from the fruit of *Crataegus oxyacantha* and *Lycium chinense.* Both patents concern only a targeted incorporation of physiologically valuable polyphenols into a beverage on the basis of drinking water, not a modification of the naturally present polyphenols concentration.

The US patent application 20030157229 teaches non-alcoholic beverages, in which the addition of polyphenols from the fruit of *Synsepalum dulcificum* from the *Sapotaceae* family and *Siraitia grosvenorii* from *Cucurbitaceae* family decreases the perception of their sweet taste.

The extract of *Silybum marianum,* CAS No: [84604-20-6], is practically insoluble in water, soluble in methanol, ethanol, acetone, and ethyl acetate. Because the mentioned extract of *Silybum marianum* is sufficiently soluble in ethanol, only ground fruit of *Silybum marianum* is used for the preparation of a bitter liqueur with a tonic and choleretic effect according to the patent RU 2111237. Also the preparation of vodka described in the patent RU 2241029 proceeds by a simple extraction of the *Silybum marianum* fruit by 40% ethanol with an addition of sugar, tartaric acid and sodium hydrogencarbonate.

For beer and beer-based beverages with the usual content of ethanol less than 6 vol. %, a technologically more suitable method of the incorporation of polyphenols into the beverages must be sought for. The desired content of polyphenols in low-alcoholic beverages can be achieved by increasing their solubility in water. For instance, the US patent application 20060153936 covers the method of solubilization of polyphenols from various flavanoid groups in non-alcoholic beverages by soya saponin.

A mixture of active polyphenols in the *Silybum marianum* extract is called silymarin. The preparation of soluble salts of the silymarin components with aminopolyhydroxy alcohols, such as meglumine, was described already in 1978 in the US patent 3,994,925. Meglumine salts in molar ratio 1 : 1 with the theoretical content of silymarin components higher than 70 % w/w are highly hygroscopic and their preparation is time consuming.

Recently a patent application WO 2002/069962 has been submitted concerning a biologically available silymarin complex with tromethamine in the mass ratio 1:1, assigned for the preparation of pharmaceutical forms, according to which a poloxamer 407 or sodium laurylsulfate is added to their solution in ethanol and the solid product is prepared by distilling off the solvent under vacuum at the temperature of 40 °C.

### Disclosure of the Invention

The object of the present invention is beer or beer-based beverage containing
- polyphenols of *Silybum marianum* in a water-soluble form comprising their mixture with at least one basic amino acid or aminohexitol in the molar ratio of from 1 : 1 to 1 : 2, and optionally also
- colloidal silicon dioxide in a water-soluble form comprising its mixture with at least one basic amino acid or aminohexitol in the molar ratio of from 1 : 3 to 1 : 4.

The extracts of *Silybum marianum* (L.) Gaertn. fruit are known by their content of polyphenolic substances having polyhydroxyphenyl chromane skeleton (G. Hahn et al., Arzneimittel - Forschung Drug Res. 1968, 18, 698-704). The extract of *Silybum marianum* contains mainly silybin and its enantiomers (silybin A, silybin B, isosilybin A, isosilybin B), further it contains silydianin, silychristin, isosilychristin, and taxifolin, the mixture is commonly denoted as silymarin.

Extract of *Silybum marianum,* CAS No: [84604-20-6] is practically insoluble in water, it is soluble in acetone, ethyl acetate, methanol, and ethanol. The physiological properties of substances contained in the *Silybum marianum* fruit are in many aspects similar to those of a group of polyphenolic substances naturally contained in beer. By their phytoestrogenic, hepatoprotective, and antioxidant effects, but also by their cancerostatic and antidiabetic effects, they can act favorably on a human organism in the beverages according to the invention, particularly on women prior to menopause. In the beverages according to the invention it is desirable that the content of alcohol does not exceed 1 vol. %, preferably it is up to 0.4 vol. %, and the content of ballast saccharides does not exceed 7.5 g/liter and the content of proteins does not exceed 4 g/liter.

It is an aspect of the invention that the polyphenols of *Silybum marianum* added to the beverage in amounts not exceeding 100 mg of silymarin per liter in a mixture with at least one basic amino acid or aminohexitol in molar ratio of from 1 : 1 to 1 : 2 come from a modified fruit of *Silybum marianum* or from its dry extract and they can contain further auxiliary substances, preferably a physiologically indifferent wetting agent.

As it is advantageous to add the substances of *Silybum marianum* into the beer or beer-based beverage in the amounts of up to 100 mg/liter, preferably 10 to 50 mg/liter, most preferably 40 to 50 mg/liter, it is technologically desirable to increase their solubility in water. In the beer and beer-based beverages this can be achieved by the addition of a mixture of the *Silybum marianum* extract with at least one basic amino acid or aminohexitol in the molar ratio of from 1:1 to 1:2 in any phase of the production process. Eventually, the mixture can contain further auxiliary substances, preferably a physiologically indifferent wetting agent.

Another aspect of the preparation of the beverages according to the present invention is the addition of at least one basic amino acid or aminohexitol to the ground defatted fruit of *Silybum marianum* or its pericarp with a known content of silymarin in the molar ratio of silymarin to basic amino acid or aminohexitol of from 1:1 to 1:2, and subsequent addition of this mixture to beer, preferably in the production phase of mashing. In the preparation of beer from the modified fruit of *Silybum marianum* it is necessary to acknowledge the fact that the silymarin content in native fruit should not be lower than 3.5 % to 4.0 %. According to the nature of the chosen method of the fruit modification, the content of silymarin in it increases at least to twice the original value due to the removal of part of the endosperm.

By mashing it is to be understood mixing of the malt grist with the defatted fruit of *Silybum marianum* or with its pericarp and with about fourfold amount of water under vigorous stirring. The mashing water temperature is usually 37 or 52°C. After mashing, when all components are perfectly mixed up, the mixture is subjected to any of the usual mashing procedures, preferably to the so-called "double-mashing" process in which the temperature regime proceeds separately.

Mixtures of the *Silybum marianum* extract with at least one basic amino acid or aminohexitol can contain also auxiliary substances, preferably physiologically indifferent wetting agents such as, e.g., PEG 6000 or vegetable saponines.

Beer is also rich in the content of biologically usable silicon dioxide, represented by the ortho-silicic acid from the phytolytic silicon dioxide occurring in barley. Beer can contain typically about 30-80 mg of the ortho-silicic acid per 1 liter. Thus, it represents an important source of usable silicon, most of which is rapidly absorbed, but also excreted, from the organism. The consumption of beer with containing silicon can strengthen bones and protect them against frangibility, of which suffer primarily women of the age over 50.

Supplementation of silicon into organism can ameliorate or moderate the incorrect distribution of calcium in bones, joints and soft tissues and thus have a favourable effect on the diseases of skin, hair and nails. Moreover, silicon also helps to maintain the necessary amount of collagen that provides bones with a higher elasticity. Sclerotic changes on arteries are characterized by an increased content of calcium and low content of silicon. Usually, about 20-50 mg of Si per day is supplied into organism by nourishment. Of these about 60 % comes from cereals where it is present in the form of phytolytic silicon dioxide, hydrated polymer SiO₂.nH₂O, and 20 % comes from drinking water and from beverages.

The ortho-silicic acid stabilized by choline is often used for supplementing silicon into the human organism (Barel A. et al.: Effect of oral intake of choline stabilized orthosilicic acid on skin, nails and hair in women with photodamaged skin. Arch. Dermatol. Res., 2005, 297, 147-153). According to US Pat. 5,922,360, such liquid preparations are prepared by stabilizing ortho-silicic acid by tetraalkyl ammonium substances, preferably by choline.

Surprisingly it has been found that the addition of the mixture of the basic amino acid or aminohexitol and the amorphous colloidal silicon dioxide to the beverage according to the present invention, the content of silicon in the beverage remains stable during the beer ageing and its storage. The mixture can contain also other auxiliary substances, preferably a physiologically indifferent wetting agent.

For beer and Dia beer (i.e., beer for diabetics), an addition of silicon in the amount of 25 mg of Si/liter can preferably be used. For non-alcoholic or low-alcoholic beer, in which lower amounts of natural silicon usually occur, the total amount of silicon in the beverages according to the invention can be modified up to the total concentration of 100 mg of Si/liter of beer, preferably up to 50 mg of Si/liter of beer. In connection with the modification of the content of natural polyphenolic substances in beverages according to the invention by the *Silybum marianum* extracts, also the content of silicon can be modified simultaneously in a single technological step.

The modification of silicon content in beer and beer-based beverages can be carried out by the addition of a mixture of colloidal silicon dioxide having the specific particle surface of from 200 to 380 m²/g with at least one basic amino acid or aminohexitol. The specific surface of the colloidal silicon dioxide particles is evaluated by the Brunauer-Emmett-Teller algorithm (S. Brunauer, P. H. Emmett, and E. Teller, J. Am. Chem. Soc., 1938, 60, 309).

For men, about 17 % of the daily intake of silicon into the organism is supplied by drinking beer, which usually contains 8 - 23 mg Si/l, while for women this amounts to only 3.5 % of the daily silicon intake. Preparation of food supplements and pharmaceutical preparations with choline-stabilized ortho-silicic acid is described in US Pat. 5,922,360. However, stabilization by choline is not suitable for beer and beer-based beverages due to the characteristic smell of choline.

The basic amino acids are preferably selected from the group comprising L-histidine, racemic histidine, L-lysine, racemic lysine, L-arginine, racemic arginine, L-ornithine, and racemic ornithine. Deoxy-1-(methylamino)-D-glucitol, denoted also as meglumine, or 2-amino-2-deoxy-D-mannitol are typical aminohexitols for the preparation of the mixture with the *Silybum marianum* extract or the mixture with the colloidal silicon dioxide. The method of the preparation of 2-amino-2-deoxy-D-mannitol is described in US Patent 4,894,344.

A very broad spectrum of amino acids occur in beer, of which proline with the content of about 30-250 mg/l is the most frequently occurring amino acid. The basic amino acids used for the preparation of the beverages according to the invention have a specific effect on the human organism. Acceleration of regeneration, recovery of energy reserve, protection of muscle mass during diets, support of new formation of muscle mass, etc., belong to their general effects. The content of basic amino acids in the beverages is proportionally increased by the addition of the polyphenolic substances from *Silybum marianum* and/or colloidal silicon dioxide in the form of a mixture with basic amino acids by the method according to the invention. Usually, the average content of essential amino acids in beer on tap amounts to 36 mg of L-histidine per liter and 16 mg of L-lysine per liter. The semi-essential L-arginine occurs in beer on tap in an average concentration of 72 mg/l.

The total content of amino acids decreases during beer ageing. Individual amino acids exhibit various tendencies to changes. However, beer contains amino acids and hydrogensalts of acids capable of forming bonds with hydrogen proton and thus to decrease the acidity of gastric juices so that they diminish the aggressiveness of stomach secrets to its walls and duodenum walls. The pH value of beer is about 4.5 and it is closer to the neutral region than the pH of the stomach content.

At all stages of beer production, the equilibrium between proteins and polyphenols is established and the reaction product can exist in both soluble and insoluble forms. The probability of turbidity formation is lower if the proteins are removed by a stabilizing action and thus the equilibrium is altered. Low temperatures during the beer maturation have a similar effect. Beer is considered to be stable if it preserves its properties of smell, taste, colour, frothiness and its microbiological and colloidal stability for a certain period of time. A non-biological turbidity is caused mainly by the tanning compounds with proteins, but also saccharides, mineral substances, and heavy metals, the content of which varies within wide limits, participate in the formation of turbidity. A cold turbidity is formed at low temperatures and it dissolves again during the beer warming. A permanent turbidity is an irreversible process. High-molecular proteins and polyphenols are present in barley and hops and during the beer malting and production they undergo changes. Nitrogen-containing high-molecular compounds (i.e., proteins) coagulate during malting and hop boiling, by fermentation and maturing of beer at low temperatures they flocculate in the form of a precipitating sludge. The faster the fermentation of wort, accompanied by a substantial decrease of pH, the faster the coagulation of proteins. In turbidities with polyphenols as precursors it is particularly the condensed proanthocyanidines that are able to precipitate the proteins. During fermentation and maturing this is manifested by a decrease of the proanthocyanidines content.

Another object of the invention is a method of modification of the polyphenols content in beer and beer-based beverages, wherein a dry extract of the *Silybum marianum* fruit in the form of a mixture with at least one basic amino acid or aminohexitol in the molar ratio of from 1:1 to 1:2 is added to a beer or beer-based beverage in an amount corresponding up to 100 mg of silymarin/liter of the beverage, preferably 10 to 50 mg of silymarin/liter of the beverage, most preferably 40 to 50 mg of silymarin/liter of the beverage, at an arbitrary stage of production. The mixture can contain further auxiliary substances, preferably a physiologically indifferent wetting agent.

The equilibrium solubility of silymarin in two kinds of beer after the addition of the water-soluble mixture with the *Silybum marianum* polyphenols according to example 1 are shown in the following table:

| ***Silybum marianum* extract *components*** | **Lager Radegast Premium** | **Non-alcoholic Radegast Birell** |
|---|---|---|
| | **[mg/l]** | **[mg/l]** |
| Silychristin | 187.51 | 176.46 |
| Silydianin | 66.12 | 61.71 |
| Silybin A | 43.03 | 38.22 |
| Silybin B | 85.18 | 75.70 |
| Isosilybin A+B | 54.33 | 48.22 |
| Total amount of silymarin | 436.17 | 400.31 |

An object of the present invention is further a method of modification of the polyphenols content in beer and beer-based beverages, wherein *Silybum marianum* pericarp or its defatted fruit in the form of a mixture with at least one basic amino acid or aminohexitol in the molar ratio of from 1:1 to 1:2 is added to the beer or beer-based beverage in the amount corresponding to up to 100 mg of silymarin/liter of the beverage, preferably 10-50 mg of silymarin/liter of the beverage, most preferably 40 to 50 mg of silymarin/liter of the beverage, at an arbitrary production stage, preferably in the stage of mashing. The mixture can further contain auxiliary substances, preferably a physiologically indifferent wetting agent.

Another object of the present invention is a method of modification of silicon content in beer and beer-based beverages, wherein silicon in the form of an aqueous solution of colloidal silicon dioxide with the specific particle surface of from 200 to 380 m²/g in a mixture with at least one basic amino acid or aminohexitol in the molar ratio of from 1:3 to 1:4 is added to the beer or beer-based beverage in the amount of up to 100 mg of silicon/liter of the beverage, preferably up to 50 mg of silicon/liter of the beverage, at an arbitrary production stage, preferably in the stage of fermentation. The mixture can contain further auxiliary substances, preferably a physiologically indifferent wetting agent.

### Examples

The invention is further illustrated by way of examples which should not be construed as further limiting.

### Example 1

Preparation of water-soluble mixture containing polyphenols of *Silybum marianum*

### Charge:

| | |
|---|---|
| Silymarin 80 % | 120.611 g |
| L-arginine 98 % | 71.103 g |
| Polyethylene glycol 6000 | 8.286 g |
| Total | 200.000 g |

The mixture was prepared by mixing silymarin with L-arginine and spray-dried polyethylene glycol in a homogenizer in the shape of a rotating cube using the laboratory mixer ERWEKA for 20 min. The powder mixture contains 48.24 % of silymarin.

Weighed amount of the mixture according to the example 1, in a dose corresponding to 100 mg of silymarin per 1 liter of beer, was added into the batch for the preparation of each of the three tested beer types. The total amount of *Silybum marianum* polyphenols in beers was determined by HPLC in bottled beer as a sum of silymarin components.

| **Beer type** | **DIA beer** | | **Non-alcoholic beer** | | **PILS 12% beer** | |
|---|---|---|---|---|---|---|
| **Silymarin components** Detection limits [mg/l] | | **Content [mg/l]** | | **Content [mg/l]** | | **Content [mg/l]** |
| Silychristin < 0.098 | | 32.7 | | 40.5 | | 42.1 |
| Silydianin < 0.027 | | 3.9 | | 7.6 | | 5.2 |
| Silybin A <0.150 | | 5.7 | | 11.5 | | 15.1 |
| Silybin B < 0.190 | | 15.4 | | 29.4 | | 28.4 |
| Isosilybin A+B < 0,320 | | 20.9 | | 12.5 | | 15.3 |
| **Total content of silymarin** | | **78.6** | | **101.5** | | **106.1** |

In the triangular degustation test of individual beer types enriched by the *Silybum marianum* polyphenols at the upper limit of acceptability, a very moderately increased aftertaste and bitterness was found in comparison with control samples.

### Taste comparison of beer by the triangular test (10 degustators)

| **Beer types** | Non-alcoholic beer | | DIA beer | | PILS 12% beer | |
|---|---|---|---|---|---|---|
| | Control | Enriched | Control | Enriched | Control | Enriched |
| **Degustation parameters** | | | | | | |
| relish | 2.10 | 2.20 | 2.20 | 2.40 | 2.60 | 2.60 |
| fullness | 2.30 | 2.30 | 2.30 | 2.40 | 2.80 | 2.80 |
| bitterness | 2.50 | 2.70 | 2.40 | 2.50 | 3.00 | 3.10 |
| aftertaste | 2.60 | 3.00 | 2.50 | 2.70 | 2.80 | 3.30 |
| foxiness | 2.00 | 2.30 | 1.50 | 2.00 | 1.60 | 2.40 |
| sweetness | 1.20 | 1.00 | 1.60 | 1.50 | 0.90 | 1.10 |
| harshness | 1.00 | 1.10 | 1.00 | 0.90 | 0.80 | 0.90 |
| hops | 0.30 | 0.30 | 0.00 | 0.00 | 0.20 | 0.00 |
| fruit/ester | 0.90 | 1.10 | 1.60 | 1.50 | 1.30 | 1.40 |
| caramel | 0.00 | 0.00 | 0.10 | 0.10 | 0.10 | 0.00 |
| perfume | 0.00 | 0.00 | 0.10 | 0.10 | 0.20 | 0.10 |
| syrup | 0.10 | 0.10 | 0.00 | 0.00 | 0.00 | 0.00 |
| wort | 1.50 | 1.30 | 0.00 | 0.00 | 0.00 | 0.00 |
| diacetyl | 0.20 | 0.10 | 0.00 | 0.00 | 0.20 | 0.20 |
| scorched | 0.10 | 0.00 | 0.00 | 0.00 | 0.00 | 0.10 |
| metallic | 0.00 | 0.10 | 0.00 | 0.00 | 0.00 | 0.00 |
| Total subj. sense | **4.60** | **4.90** | **4.60** | **4.85** | **4.40** | **4.70** |

Result of the degustation triangular test:

| | | | |
|---|---|---|---|
| Non-alcoholic beer | Control/Enriched | : | significant difference (8/10) |
| DIA beer | Control/Enriched | : | negative (5/10) |
| LAGER beer | Control/Enriched) | : | negative (6/10) |

### Example 2

### Preparation of water-soluble mixture containing silicon

### Charge:

| | |
|---|---|
| Aerosil® 200 | 128.50 g |
| L-lysine monohydrate 97 % | 1205.60 g |
| Polyethylene glycol 6000 | 15.90 g |
| Total | 1350.00 g |

The mixture was prepared by mixing colloidal silicon dioxide with lysine and polyethylene glycol in a homogenizer in the shape of a rotating cube using the laboratory mixer ERWEKA for 20 min. The powder mixture contains 3.70 % of elemental silicon.

The powder mixture containing water-soluble silicon stabilized by L-lysine according to this example was used for the modification of silicon content in two experimental beer batches per 40 liters. In order to increase the silicon content by 25 mg/liter, 27.03 g of the mixture dissolved previously in 200 ml of water was added to each batch.

### I. Preparation of PILS 12 % beer with a modified silicon content

### Raw materials:

### "Pilsener" light malt, barley of the Tolar variety

50 % of the hops extract prepared by the carbon dioxide extraction
50 % medium-early red hops of the " 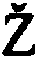 atec" type

The dissolved mixture containing silicon was added during wort fermentation after cooling down to the fermentation temperature.

### Mashing and hop-boiling:

Double-mashing method with mashing at 37 °C and subsequent steaming at 52 °C was used.

### 1^{st} mashing:

Pause at 63 °C 10 minutes (lower, sugar-forming)
Pause at 72 °C 15 minutes (sugar-forming)
1^{st} mash boiling 20 minutes

### 2^{nd} mashing:

Pause at 72 °C 15 minutes
2^{nd} mash boiling 20 minutes
Rest in the straining tank at 75 °C, 30 minutes
Hop boiling 90 minutes

### Main fermentation:

Fermentation temperature 8 °C, maximum temperature 10 °C, period of main fermentation 192 hours

### Beer maturation, filtration, and bottling:

Beer matured for 30 days at 1°C, it was filtered through plate filter, and it was bottled under carbon dioxide protection. It was pasteurized in a water bath with the pasteurization level 25 units. (One pasteurization unit is defined as heating to 60 °C for one minute.) The number of pasteurization units increases exponentially with the temperature increase above 60 °C. 25 pasteurization units represent an integral of the persistence above 60 °C, with maximum temperature of 62 °C. Silicon content in control batch was 41 mg/liter. Silicon content in the experimental batch was 61 mg/liter.

### II. Preparation of DIA beer 10% with a modified silicon content

### Raw materials:

### "Pilsener" light malt, barley of the "Tolar" variety

50 % of the hops extract prepared by the carbon dioxide extraction
50 % medium-early red hops of the " 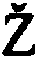 atec" type

Microbial enzyme preparations - alpha-amylase + amyloglucosidase: addition to the mash. The dissolved mixture containing silicon was added during wort fermentation after cooling down to the fermentation temperature.

### Mashing and hop boiling:

A single-mashing method with mashing at 37 °C and subsequent steaming to 52 °C was used.

| | |
|---|---|
| Pause at 52 °C | 15 minutes |

Heating to 62 °C, pause 20 minutes 1^{st} mash:

| | |
|---|---|
| Pause at 72 °C | 20 minutes |
| Mash boiling | 20 minutes |

Temperature after mash return 72 °C, pause 20 minutes and heating to 76 °C, rest 20 minutes

| | |
|---|---|
| Hop boiling | 90 minutes |

### Main fermentation:

Fermentation temperature 8 °C, maximum temperature 10 °C, period of main fermentation 192 hours

### Beer maturation, filtration, and bottling:

Beer matured for 30 days at 1 °C, it was filtered through a plate filter, and it was bottled under carbon dioxide protection. It was pasteurized in water bath with the pasteurization level of 25 units. Silicon content in the control batch was 33 mg/liter. Silicon content in the experimental batch was 58 mg/liter.

### Example 3

Preparation of the water-soluble mixture containing *Silybum marianum* polyphenols

### Charge:

| | |
|---|---|
| Silymarin 80% | 603.05 g |
| 1-Deoxy-1-(methylamino)-D-glucitol 99% | 394.34 g |
| Tea saponin | 2.61 g |
| Total | 1000.00 g |

The mixture was prepared by mixing silymarin with tea saponin in a homogenizer in the shape of a rotating double truncated cone using the laboratory mixer ERWEKA for 10 minutes. 1-deoxy-1-(methylamino)-D-glucitol was added to this mixture after the mixing termination and the content of the homogenizer was mixed for another 10 minutes. The prepared powder mixture contains 48.24 % of silymarin.

A charge of 3.7313 g of the water-soluble mixture containing *Silybum marianum* polyphenols according to this example in a dose corresponding to 45 mg of silymarin / 1 liter of beer was added into a 40-liter batch for the preparation of each of the three tested types of beer. The mixture with silymarin content was dispersed in 1 liter of water and added to the batch of beers of the PILS 12 % and DIA types during the wort fermentation after cooling down to the fermentation temperature. The procedure of the beers preparation corresponded to the procedure described in Example 2.

### Procedure of the non-alcoholic beer preparation:

The water-soluble mixture of the *Silybum marianum* polyphenols was added into a cask of the non-alcoholic beer Radegast Birell in an amount corresponding to 45 mg of silymarin / liter of beer and after its dissolution beer was filtered through a plate filter and bottled under the carbon dioxide protection. It was pasteurized in a water bath at the pasteurization level of 25 units.

In beers prepared by this procedure their durability was evaluated by the determination of EBC units. Common commercial beers have the value of EBC units between 0.3 and 0.7. As the values of brightness do not change in time, the results of the durability determination prove that beers enriched by the *Silybum marianum* extract according to this invention are colloidally stable, their components such as proteins and polyphenols do not precipitate from the solution and do not form any turbidity in the beer. The results of the durability of three beers with the modified content of polyphenols compared with control beers are presented in the following Table:

### Determination of beer durability

| Beer type | **DIA beer** | | **Non-alcoholic beer** | | **PILS 12 % beer** | |
|---|---|---|---|---|---|---|
| Sample age | **Control** | **Enriched** | **Control** | **Enriched** | **Control** | **Enriched** |
| Initial analysis | 0.42 | 0.32 | 0.18 | 0.15 | 0.28 | 0.27 |
| After 21 days | 0.47 | 0.33 | 0.20 | 0.17 | 0.32 | 0.3 |
| After 35 days | 0.5 | 0.38 | 0.20 | 0.17 | 0.34 | 0.31 |
| Increase of | | | | | | |
| EBC units | 0.08 | 0.06 | 0.02 | 0.02 | 0.06 | 0.04 |

### Example 4

Preparation of a water-soluble mixture containing silicon

### Charge:

| | |
|---|---|
| Aerosil® 200 | 102.78 g |
| 1-Deoxy-1-(methylamino)-D-glucitol 99 % | 1112.10 g |
| Polyethylene glycol 6000 | 35.12 g |
| Total | 1250.50 g |

The mixture was prepared by mixing colloidal silicon dioxide and spray-dried polyethylene glycol in a homogenizer in the shape of a double truncated cone in the laboratory mixer ERWEKA for 10 minutes. Then, 1-deoxy-1-(methylamino)-D-glucitol was added into the homogenizer vessel and the mixture was again mixed for 10 minutes. The homogeneous powder mixture contains 3.20 % of elemental silicon. The powdery mixture containing water-soluble silicon stabilized by 1-deoxy-1-(methylamino)-D-glucitol according to this example was used for the modification of silicon content in beer wort and for the determination of the stability of silicon content in beer in dependence on the storage time and conditions (pH and temperature). The evaluation was made for three kinds of samples:

### Sample I:

### Wort without Si addition

12 g of centrifugated yeast was added to 600 ml of beer wort (with the natural content of Si = 46 mg/liter). Fermentation proceeded in laboratory conditions at 12 °C, after achieving the fermentation difference of about 8 % the fermentation proceeded at 2 °C.

### Sample II:

Beer wort with the addition of 25 mg of Si/liter; wort pH = 5.5
12 g of centrifugated yeast and 469 mg of the mixture of water-soluble silicon according to this example was added to 600 ml of beer wort (with the natural content of Si = 46 mg/liter). Fermentation proceeded in laboratory conditions at 12 °C, after achieving the fermentation difference of about 8 % the fermentation proceeded at 2 °C.

### Sample III:

Beer wort with the addition of 25 mg of Si/liter; wort pH = 5.2 (adjusted by lactic acid)

12 g of centrifugated yeast and 469 mg of the mixture of water-soluble silicon according to this example was added to 600 ml of beer wort (with the natural content of Si = 46 mg/liter). Fermentation proceeded in laboratory conditions at 12 °C, after achieving the fermentation difference of about 8 % the fermentation proceeded at 2 °C.

The initial contents of Si were measured in non-filtered samples of the initial wort (Sample I) and also after the addition of Si to the wort (Samples II and III). After the fermentation termination (1^{st} week) and final fermentation (2^{nd} - 4^{th} weeks) all samples were filtered before analysis.

Results of the found Si contents in the fermenting wort after the addition of the water-soluble mixture containing silicon according to this example are shown in the following Table:

| Sample | Initial content | After 1^{st} week /12°C | After 2^{nd} week/2°C | After 3^{rd} week/2°C | After 4^{th} week/2°C |
|---|---|---|---|---|---|
| Sample I | 46 mg Si /liter | 46 mg Si /liter | 46 mg Si /liter | 45 mg Si /liter | 45 mg Si /liter |
| Sample II | 69 mg Si /liter | 70 mg Si /liter | 68 mg Si /liter | 70 mg Si /liter | 70 mg Si /liter |
| Sample III | 70 mg Si /liter | 71 mg Si /liter | 69 mg Si /liter | 70 mg Si /liter | 71 mg Si /liter |

After the addition of the mixture containing Si, its content increased approximately to the assumed value. After the final fermentation at decreased temperature the Si content practically does not change and the effect of pH in the observed region is not observable.

### Example 5

### Determination of the silicon content stability in beer

The water-soluble mixture containing silicon according to example 2 was added in the amount of 405 mg to 600 ml of beer wort (with the natural content of Si = 46 mg/liter) together with 12 g of centrifuged yeast. Fermentation proceeded under laboratory conditions at 12 °C, after achieving the fermentation difference of about 8 % the fermentation continued at 2 °C. The initial contents of Si were measured in non-filtered samples of the initial wort (Sample I) and also after the addition of Si to wort (Samples II and III). After the fermentation termination (1^{st} week) and final fermentation (2^{nd} - 4^{th} weeks) all samples were filtered before analysis.

The results of determined Si contents in fermenting wort after the addition of the water-soluble mixture with a content of silicon in composition according to the example 2 are shown in the following Table:

| Sample | Initial content | After 1^{st} week /12°C | After 2^{nd} week/2°C | After 3^{rd} week/2°C | After 4^{th} week/2°C |
|---|---|---|---|---|---|
| Sample I | 46 mg Si /liter | 45 mg Si /liter | 46 mg Si /liter | 46 mg Si /liter | 47 mg Si /liter |
| Sample II | 70 mg Si /liter | 65 mg Si /liter | 66 mg Si /liter | 64 mg Si /liter | 67 mg Si /liter |
| Sample III | 72 mg Si /liter | 66 mg Si /liter | 67 mg Si /liter | 66 mg Si /liter | 68 mg Si /liter |

Addition of the water-soluble mixture containing silicon according to example 2 to the beer wort appears to be a useful method, as after fermentation, final fermentation and filtration the amount of the added silicon deceases only by about 5 per cent.

### Example 6

### Laboratory preparation of beer with an extract of the pressed fruit of Silybum marianum

### Charge for 20 liters of dark beer

| | |
|---|---|
| Powdery concentrate of the dark beer wort (Beer Brewing Institute, Prague) | 2500.00 g |
| Pressed fruit of *Silybum marianum,* variety Silyb | 20.00 g |
| L-histidine 99 % | 0.65 g |
| Beer yeast (Fermentis) | 11.50 g |
| Water for wort dilution | q.s. 20 liters |

In the laboratory preparation of beer the bottled spring water TOMA of the Natura drill in Adrspach-Teplice rock formations was used.

### Procedure:

L-histidine was added to the ground *Silybum marianum* fruit, defatted by pressing, and 100 ml of hot water was added to the mixture. The mixture was shaken for 24 hours in a laboratory shaker. Then 3.75 liters of tepid water was added to the powdery concentrate of wort, the shaken suspension of the *Silybum marianum* fruit in histidine solution, and the mixture was mixed to a pulp in stainless steel vessel of the volume of 25 liters. Lyophilized yeast was mixed with 0.30 liter of water at 35 °C and after about one hour of rest it was added to the mixed wort with the *Silybum marianum* fruit and again thoroughly mixed. After adding the yeast, the vessel was made up to 20 liters (by 13.4 liters of water). The vessel with wort was kept in a cool room at 12-15 °C and the fermentation vessel was covered with linen permeating gases. After 5 days of fermentation the surface layer of the mixture was removed and the liquid with yeast was transferred by a tube into glass bottles of the volume of 0.5 liter with a screw cap.

The bottles were kept for 3 days at the fermentation temperature and then placed in a refrigerator and matured for 7-10 days at the temperature of 5-7 °C. The content of silymarin found was 39 mg in 1 liter of the yielded unfiltered fermented beer, i.e., 81.25 % yield of silymarin.

The analysis results of the *Silybum marianum* fruit, defatted by pressing, that was used for the preparation of 12 % dark beer, were as follows:

| | | |
|---|---|---|
| Loss by drying: | | 6.5 % |
| Lipids | | 6.0 % |
| Content of silymarin | | 4.8 % |
| Of these: | silybin | 3.2 % |
| | silydianin | 0.2 % |
| | silychristin | 1.2 % |
| | taxifolin | 0.3 % |
| Aflatoxins B1, B2, G1, and G2 | | <4 µg/kg |

### Industrial applicability

The invention is applicable in the industry of beverages production, particularly for the preparation of beer, flavoured beers with a decreased content of alcohol and also with a decreased content of sugar. It is also applicable in the production of beer-based beverages, particularly fermented wort beverages produced from wort by the brewery technology, but also for mixed beverages prepared by mixing beer with a non-alcoholic beverage or with a beverage concentrate for the preparation of non-alcoholic beverages and with soda water.

## Claims

1. Beer or beer-based beverage, **characterized in that** it contains polyphenols of *Silybum marianum* in a water-soluble form comprising a mixture of the *Silybum marianum* polyphenols with at least one basic amino acid or aminohexitol in the molar ratio of from 1 : 1 to 1 : 2.

2. Beer or beer-based beverage according to claim 1, **characterized in that** it further contains colloidal silicon dioxide in a water-soluble form comprising a mixture of the colloidal silicon dioxide with at least one basic amino acid or aminohexitol in the molar ratio of from 1 : 3 to 1 : 4.

3. Beer or beer-based beverage according to claim 1 or 2, **characterized in that** the basic amino acids are selected from the group comprising L-histidine, racemic histidine, L-lysine, racemic lysine, L-arginine, racemic argynine, L-omithine, racemic ornithine, and aminohexitol is preferably 1-deoxy-1-(methylamino)-D-glucitol or 2-amino-2-deoxy-D-mannitol.

4. Beer or beer-based beverage according to claim 1 or 2, **characterized in that** the content of polyphenols of *Silybum marianum* in the beer or beer-based beverage is up to 100 mg of silymarin/liter, preferably 10-50 mg of silymarin/liter, most preferably 40-50 mg of silymarin/liter, and **in that** polyphenols are added in the form of a modified *Silybum marianum* fruit or its dry extract in a mixture with at least one basic amino acid or aminohexitol in the molar ratio of from 1:1 to 1:2, which can optionally contain auxiliary substances, preferably a physiologically indifferent wetting agent.

5. Beer or beer-based beverage according to claim 2, **characterized in that** the content of colloidal silicon dioxide in beer or beer-based beverage is up to 100 mg of silicon/liter, preferably up to 50 mg of silicon/liter, and colloidal silicon dioxide is in the form of colloidal silicon dioxide with specific particle surface of from 200 to 380 m²/g in a mixture with at least one basic amino acid or aminohexitol in the molar ratio of from 1:3 to 1:4, that can optionally contain auxiliary substances, preferably a physiologically indifferent wetting agent.

6. Beer or beer-based beverage according to any of claims 1 to 5, **characterized in that** they contain up to 0.4 % w/w alcohol, up to 7.5 g/liter of ballast saccharides, and up to 4 g/liter of proteins.

7. A method of modification of the polyphenols content in beer or beer-based beverages, **characterized in that** a dry extract of the *Silybum marianum* fruit is added to the beer or beer-based beverage an amount corresponding to up to 100 mg of silymarin/liter of the beverage, preferably 10 to 50 mg of silymarin/liter of the beverage, most preferably 40 to 50 mg of silymarin/liter of the beverage, in the form of a mixture with at least one basic amino acid or aminohexitol in the molar ratio of from 1:1 up to 1:2, optionally with other auxiliary substances, preferably with a physiologically indifferent wetting agent, at any production stage.

8. A method of modification of the polyphenols content in beer or beer-based beverages, **characterized in that** the *Silybum marianum* pericarp or its defatted fruit is added to beer or beer-based beverage in an amount corresponding to up to 100 mg of silymarin/liter of the beverage, preferably 10 to 50 mg of silymarin/liter of the beverage, most preferably 40 to 50 mg of silymarin/liter of the beverage, in the form of a mixture with at least one basic amino acid or aminohexitol in molar ratio of from 1:1 to 1:2, optionally with other auxiliary substances, preferably with a physiologically indifferent wetting agent, at any production stage, preferably at the production stage of mashing.

## Patentansprüche

1. Bier oder ein auf Bier basierendes Getränk, **dadurch gekennzeichnet, dass** es Polyphenole von *Silybum marianum* in einer mit Wasser-löslichen Form, die eine Mischung der *Silybum marianum* Polyphenole mit mindestens einer basischen Aminosäure oder Aminohexitol im Molverhältnis von 1:1 bis 1:2 aufweist.

2. Bier oder ein auf Bier basierendes Getränk gemäß Anspruch 1, **dadurch gekennzeichnet, dass** es zusätzlich ein kolloidales Siliziumdioxid in einer Wasser-löslichen Form enthält, die eine Mischung des kolloidalen Siliziumdioxids mit mindestens einer basischen Aminosäure oder Aminohexitol im Molverhältnis von 1:3 bis 1:4 aufweist.

3. Bier oder ein auf Bier basierendes Getränk gemäß Anspruch 1 oder 2, **dadurch gekennzeichnet, dass** die basischen Aminosäuren aus der Gruppe, umfassend L-Histidin, racemischen Histidin, L-Lysin, racemischen Lysin, L-Arginin, racemischen Arginin, L-Ornithin, racemischen Ornithin, ausgewählt sind, und Aminohexitol vorzugsweise 1-Desoxy-1-(methylamino)-D-glucitol oder 2-Amino-2-desoxy-D-mannitol ist.

4. Bier oder ein auf Bier basierendes Getränk gemäß Anspruch 1 oder 2, **dadurch gekennzeichnet, dass** der Gehalt an Polyphenolen von *Silybum marianum* im Bier oder in einem auf Bier basierenden Getränks bis zu 100 mg Silymarin/Liter ist, vorzugsweise 10-50 mg von Silymarin/Liter ist , am meisten bevorzugt 40-50 mg von Silymarin/Liter ist, und dass Polyphenole in der Form eines modifizierten *Silybum marianum* Frucht oder dessen Trockenextrakt in einer Mischung mit mindestens einer basischen Aminosäure oder Aminohexitol im Molverhältnis von 1:1 bis 1:2 hinzugefügt sind, dass gegebenenfalls Hilfsstoffe, bevorzugt ein physiologisch indifferentes Netzmittel enthalten kann.

5. Bier oder ein auf Bier basierendes Getränk gemäß Anspruch 2, **dadurch gekennzeichnet, dass** der Gehalt an kolloidalem Siliziumdioxid im Bier oder in einem auf Bier basierenden Getränk bis zu 100 mg Silicium/Liter ist, vorzugsweise bis zu 50 mg Silicium/Liter ist und das kolloidale Siliziumdioxid ist in der Form von kolloidalem Siliziumdioxid mit spezifischen Teilchenoberfläche von 200 bis 380 m²/g in einer Mischung mit mindestens einer basischen Aminosäure oder Aminohexitol im Molverhältnis von 1:3 bis 1:4, die gegebenenfalls Hilfsstoffe enthalten kann, bevorzugt ein physiologisch indifferentes Netzmittel.

6. Bier oder ein auf Bier basierendes Getränk gemäß Ansprüche 1 bis 5, **dadurch gekennzeichnet, dass** sie bis zu 0,4 % Gewichtsprozent Alkohol, bis zu 7,5 g/Liter von Ballastsachariden und bis zu 4g/Liter von Proteinen enthält.

7. Das Verfahren zur Modifikation des Gehalts der Polyphenole im Bier oder auf Bier basierenden Getränken, **dadurch gekennzeichnet, dass** der Trockenextrakt der *Silybum marianum* Frucht zum Bier oder auf Bier basierendem Getränk in einer Menge, die bis zu 100 mg Silymarin/Liter, vorzugsweise 10 bis 50 mg Silymarin/Liter des Getränks, am meisten bevorzugt 40 bis 50 mg von Silymarin/Liter des Getränks zugegeben wird in Form einer Mischung mit mindestens einer basischen Aminosäure oder Aminohexitol im Molverhältnis von 1:1 oder 1:2, gegebenenfalls mit weiteren Hilfsstoffen, vorzugsweise mit einem physiologisch indifferenten Netzmittel, zu jeder Produktionsstufe.

8. Das Verfahren zur Modifikation des Gehalts der Polyphenole im Bier oder auf Bier basierenden Getränken, **dadurch gekennzeichnet, dass** die Perikarp von *Silybum marianum* oder dessen entfettete Frucht wird zu dem Bier oder auf Bier basierendem Getränk in einer Menge entsprechend bis zu 100 mg Silymarin/Liter des Getränks, bevorzugt 10 bis 50 mg Silymarin/Liter des Getränks, am meisten bevorzugt 40 bis 50 mg von Silymarin/Liter des Getränks zugesetzt, in Form einer Mischung mit mindestens einer basischen Aminosäure oder Aminohexitol im Molverhältnis von 1:1 oder 1:2, gegebenenfalls mit weiteren Hilfsstoffen, vorzugsweise mit einem physiologisch indifferenten Netzmittel, zu jeder Produktionsstufe, vorzugsweise bei der Produktion von Maischen.

## Revendications

1. Bière ou boisson à base de bière **caractérisée en ce qu'**elle contient des polyphénols du *Silybum marianum* sous forme soluble dans l'eau comprenant un mélange de polyphénols de *Silybum marianum* avec au moins un acide aminé basique ou aminohexitol au rapport molaire allant de 1 : 1 jusqu'à 1 : 2.

2. Bière ou boisson à base de bière selon la revendication 1 **caractérisée en ce qu'**elle contient en outre le dioxyde de silicium colloïdal sous forme soluble dans l'eau comprenant un mélange de dioxyde de silicium colloïdal avec au moins un acide aminé basique ou aminohexitol au rapport molaire allant de 1 : 3 jusqu'à 1 : 4.

3. Bière ou boisson à base de bière selon la revendication 1 ou 2 **caractérisée en ce que** les acides aminés basiques sont choisis parmi le groupe comprenant L-histidine, histidine racémique, L-lysine, lysine racémique, L-arginine, arginine racémique, L-ornithine, ornithine racémique, et l'aminohexitol est de préférence 1-deoxy-1-(methylamino)-D-glucitol ou 2-amino-2-deoxy-D-mannitol.

4. Bière ou boisson à base de bière selon la revendication 1 ou 2 **caractérisée en ce que** le contenu de polyphénols de *Silybum marianum* dans la bière ou dans la boisson à base de bière ne dépasse pas 100 mg de silymarine/litre, étant de préférence 10 à 50 mg de silymarine/litre et notamment 40 à 50 mg de silymarine/litre, et **en ce que** les polyphénols sont ajoutés sous forme de fruit modifié de *Silybum marianum* ou de son extrait sec en mélange avec au moins un acide aminé basique ou aminohexitol au rapport molaire allant de 1 : 1 jusqu'à 1 : 2, lequel peut éventuellement contenir d'autres substances auxiliaires, de préférence un agent de mouillage physiologiquement indifférent.

5. Bière ou boisson à base de bière selon la revendication 2 **caractérisée en ce que** le contenu du dioxyde de silicium colloïdal ne dépasse pas 100 mg de silicium/litre, étant de préférence jusqu'à 50 mg de silicium/litre, et le dioxyde de silicium colloïdal est sous forme de dioxyde de silicium colloïdal à la surface spécifique des particules de 200 à 380 m²/g en mélange avec au moins un acide aminé basique ou aminohexitol au rapport molaire allant de 1 : 3 jusqu'à 1 : 4, lequel peut éventuellement contenir d'autres substances auxiliaires, de préférence un agent de mouillage physiologiquement indifférent.

6. Bière ou boisson à base de bière selon les revendications 1 à 5 **caractérisées en ce que** leur contenu en alcool ne dépasse pas 0,4 % en poids, le contenu de glucides ballast ne dépassant pas 7,5 g/litre et le contenu de protéines ne dépassant pas 4 g/litre.

7. Procédé de traitement du contenu des polyphénols dans la bière et dans les boissons à base de bière **caractérisé en ce que** l'extrait sec du fruit de *Silybum marianum* est ajouté en quantité ne dépassant pas 100 mg de silymarine/litre de boisson, de préférence 10 à 50 mg de silymarine/litre de boisson, notamment 40 à 50 mg de silymarine/litre de boisson, sous forme de mélange avec au moins un acide aminé basique ou aminohexitol au rapport molaire allant de 1 : 1 jusqu'à 1 : 2, éventuellement avec d'autres substances auxiliaires, de préférence un agent de mouillage physiologiquement indifférent, en n'importe quelle phase de fabrication.

8. Procédé de traitement du contenu des polyphénols dans la bière et dans les boissons à base de bière **caractérisé en ce que** le péricarpe de *Silybum marianum* ou son fruit dégraissé est ajouté en quantité ne dépassant pas 100 mg de silymarine/litre de boisson, de préférence 10 à 50 mg de silymarine/litre de boisson, notamment 40 à 50 mg de silymarine/litre de boisson, sous forme de mélange avec au moins un acide aminé basique ou aminohexitol au rapport molaire allant de 1 : 1 jusqu'à 1 : 2, éventuellement avec d'autres substances auxiliaires, de préférence un agent de mouillage physiologiquement indifférent, en n'importe quelle phase de fabrication, de préférence en phase de traitement du démêlage.
